# EUROPÄISCHE PATENTSCHRIFT

(11) **EP 3 426 464 B1**
(45) Veröffentlichungstag und Bekanntmachung des Hinweises auf die Patenterteilung: **07.10.2020**
(21) Anmeldenummer: 17710195.3
(22) Anmeldetag: 08.03.2017
(51) Int. Cl.: B29C 65/16

(54) **VERFAHREN ZUM HERSTELLEN EINER FORMTEILANORDNUNG**
METHOD FOR PRODUCING A MOULDED PART ASSEMBLY
PROCÉDÉ DE FABRICATION D'UN ENSEMBLE DE PIÈCES MOULÉES

(30) Priorität: 11.03.2016 DE 102016204066
(43) Veröffentlichungstag der Anmeldung: 16.01.2019
(73) Patentinhaber: aft automotive GmbH, 48268 Greven-Reckenfeld (DE)
(72) Erfinder: HEMKER, Daniel, 49078 Osnabrück (DE); HUES, Patrick, 48147 Münster (DE); MÄRTEN, Andreas, 37176 Nörten-Hardenberg (DE); KRAMER, Dirk, 48329 Havixbeck (DE)
(74) Vertreter: Dietz, Christopher Friedrich
(86) Internationale Anmeldenummer: PCT/EP2017/055483
(87) Internationale Veröffentlichungsnummer: WO 2017/153493

(56) Entgegenhaltungen:
- EP-A1- 1 710 007
- EP-A1- 2 505 338
- EP-A2- 1 048 439
- EP-A2- 2 500 161
- DE-U1- 20 023 490
- JP-A- 2007 253 416
- JP-A- 2007 260 957
- JP-A- 2008 221 684
- JP-A- 2009 072 987
- JP-A- 2011 255 683
- JP-A- 2015 066 750

## Beschreibung

Die Erfindung betrifft ein Verfahren zum Herstellen einer Formteilanordnung aus einem ersten Kunststoffformteil und einem zweiten Kunststoffformteil mittels Laserschweißen, wobei das erste Kunststoffformteil zumindest teilweise aus einem ersten Material und das zweite Kunststoffformteil zumindest teilweise aus einem mit dem ersten Material verschweißbaren zweiten Material besteht, wobei ein Schweißbereich des zweiten Kunststoffformteils in einer gestuften Aufnahme des ersten Kunststoffformteils oder umgekehrt angeordnet wird, wobei die Kunststoffformteile jeweils als Fluidleitungselement vorliegen, wobei in der Aufnahme eine zumindest mit einer Teilfläche in einer ersten Rotationsfläche liegende sowie dem zweiten Kunststoffformteil zugewandte erste Schweißfläche des ersten Kunststoffformteils und an dem zweiten Kunststoffformteil eine stirnseitige, in einer zweiten Rotationsfläche liegende sowie dem ersten Kunststoffformteil zugewandte zweite Schweißfläche ausgebildet wird, und wobei das erste Kunststoffformteil und das zweite Kunststoffformteil während des Laserschweißens in einer Verlagerungsrichtung aufeinander zu verlagert werden, wobei die erste Schweißfläche und die zweite Schweißfläche während des Laserschweißens aneinander anliegen oder sich über ein Einlegeteil aneinander abstützen, und wobei ein zum Laserschweißen verwendeter Laserstrahl in radialer Richtung nach innen oder nach außen gerichtet ist.

Das Verfahren dient dem Herstellen der Formteilanordnung. Hierzu werden zunächst zumindest das erste Kunststoffformteil und das zweite Kunststoffformteil bereitgestellt. Anschließend werden das erste Kunststoffformteil und das zweite Kunststoffformteil zum Herstellen beziehungsweise Ausbilden der Formteilanordnung mittels Laserschweißen miteinander verbunden. Um das Laserschweißen zu ermöglichen, besteht das erste Kunststoffformteil zumindest teilweise aus dem ersten Material und das zweite Kunststoffformteil zumindest teilweise aus dem zweiten Material. Als erstes Material sowie als zweites Material wird jeweils ein Kunststoff verwendet.

Beispielsweise ist das erste Material lasertransparent, wohingegen das zweite Material laserabsorbierend ist. Das bedeutet, dass das erste Material für die Wellenlänge oder den Wellenlängenbereich des zum Laserschweißen verwendeten Laserstrahls beziehungsweise Laserlichts einen höheren Transmissionsgrad aufweist als das zweite Material beziehungsweise umgekehrt das zweite Material für die Wellenlänge oder den Wellenlängenbereich eine größere Opazität aufweist als das erste Material. Es kann jedoch auch eine andere Ausführungsform vorliegen, bei welcher das zweite Material lasertransparent und das erste Material laserabsorbierend ist. Das erste Material ist mit dem zweiten Material und umgekehrt verschweißbar. Das bedeutet, dass die beiden Materialien durch das Laserschweißen eine stoffschlüssige Verbindung miteinander eingehen beziehungsweise in eine solche gebracht werden.

Der Laserstrahl wird zum Laserschweißen zum Beispiel derart ausgerichtet, dass er zunächst das erste Kunststoffformteil passiert und zumindest teilweise durch das erste Kunststoffformteil hindurch zu dem zweiten Kunststoffformteil gelangt. Der Laserstrahl ist also wenigstens teilweise auf das erste Kunststoffformteil ausgerichtet. Bevorzugt tritt der das zweite Kunststoffformteil erreichende Laserstrahl oder Teil des Laserstrahls vollständig durch das erste Kunststoffformteil hindurch. Dies wird - sofern das erste Material lasertransparent und das zweite Material laserabsorbierend ist - durch den höheren Transmissionsgrad des ersten Materials im Vergleich mit dem zweiten Material ermöglicht.

Während des Laserschweißens wird im Rahmen des vorstehend erläuterten Beispiels durch den Laserstrahl Energie in das zweite Kunststoffformteil eingetragen und dort in dem laserabsorbierenden zweiten Material in Wärme umgesetzt. Entsprechend erwärmt sich das zweite Kunststoffformteil unter dem Einfluss des Laserstrahls bereichsweise. Während des Laserschweißens wird das zweite Kunststoffformteil beziehungsweise das zweite Material mittels des Laserstrahls aufgrund der durch diesen erzeugten Wärme bereichsweise aufgeschmolzen, wodurch sich eine stoffschlüssige Verbindung des zweiten Kunststoffformteils mit dem ersten Kunststoffformteil ergibt.

Zusätzlich oder alternativ kann die in dem zweiten Kunststoffformteil anfallende Wärme durch Wärmeübertragung von dem zweiten Kunststoffformteil auf das erste Kunststoffformteil übertragen werden, sodass sich auch dessen Temperatur erhöht. Dies kann dazu führen, dass auch das erste Kunststoffformteil beziehungsweise das erste Material bereichsweise aufgeschmolzen wird und sich mit dem zweiten Kunststoffformteil beziehungsweise dem zweiten Material, insbesondere dem aufgeschmolzenen zweiten Kunststoffformteil beziehungsweise dem aufgeschmolzenen zweiten Material, verbindet.

Beispielsweise liegen das erste Kunststoffformteil und das zweite Kunststoffformteil jeweils als Fluidleitungselement vor. Bevorzugt ist das erste Kunststoffformteil eine Fluidkupplung, insbesondere eine Fluidschnellkupplung, während das zweite Kunststoffformteil eine Fluidleitung oder ein Fluidrohr ist. Derartige Anordnungen aus Fluidkupplung und Fluidleitung werden häufig im Kraftfahrzeugbereich, beispielsweise zur Herstellung einer Kraftstoffverbindung, verwendet.

Besonders bevorzugt werden das erste Kunststoffformteil und das zweite Kunststoffformteil mit unterschiedlichen Herstellungsprozessen hergestellt. Beispielsweise wird das erste Kunststoffformteil durch Spritzgießen und das zweite Kunststoffformteil durch Extrudieren ausgebildet. Das erste Kunststoffformteil kann insoweit als Spritzgießformteil und das zweite Kunststoffformteil als Extrusionsformteil vorliegen.

Aus dem Stand der Technik ist beispielsweise die Druckschrift WO 2008/068328 A2 bekannt. Diese beschreibt ein Verfahren zum Laserschweißen von zumindest zwei Bauteilen aus Kunststoff, insbesondere eines Rohrs und einer Tragplatte, wobei das erste Bauteil zumindest bereichsweise für einen beim Laserschweißen verwendeten Laserstrahl eine relativ hohe Durchlässigkeit aufweist, und wobei das zweite Bauteil zumindest bereichsweise für den beim Laserschweißen verwendeten Laserstrahl eine relativ niedrige Durchlässigkeit aufweist. Eine kompakte Bauform für die Bauteile soll erzielt werden, indem der Laserstrahl beim Laserschweißen durch Brechung und/oder Reflektion zur jeweiligen Schweißstelle gelangt. Eine derartige Vorgehensweise ist allenfalls mit sehr hohem Aufwand zu überwachen. Entsprechende Einrichtungen sind technisch lediglich schwierig und kostenintensiv umzusetzen.

Weiterhin ist aus dem Stand der Technik beispielsweise die Druckschrift EP 1 048 439 A2 bekannt. Diese beschreibt ein Verfahren und eine Vorrichtung zum Schweißen, wobei zur Verbindung zweier Flächen von thermoplastischem Kunststoff im Durchstrahl-Schweißverfahren eine verdeckte Fläche durch eine abdeckende Fläche hindurch mit einem Laserstrahl im Durchlauf mehrfach abgescannt und dadurch schrittweise erwärmt wird. Diese Vorwärmung wird wiederholt, bis die Schmelztemperatur erreicht ist. Im Bereich der verdeckten Fläche entsteht dadurch gleichzeitig über die gesamte Nahtlänge eine Schmelze, welche die abdeckende Fläche benetzt und durch Wärmeleitung ebenfalls in Schmelze überführt. Mit Beginn der Materialabweichung werden die Flächen gegeneinander bis zum Anschlag bewegt. Dadurch verschweißen die beiden Flächen im Prinzip so, als wären sie über die gesamte Nahtlänge simultan plastifiziert worden.

Aus der Druckschrift DE 200 23 490 U1 ist eine Vorrichtung zum Laserschweißen einer Verbindung zwischen einer ersten Fügefläche eines Bauteils und einer zweiten Fügefläche eines weiteren Bauteils bekannt.

Weiterhin sind aus dem Stand der Technik die Druckschriften EP 1 710 007 A1, EP 2 505 338 A1, EP 2 500 161 A2, JP 2011-255683 A1, JP 2007-253416 A, JP 2008-221684 A, JP 2015-66750 A und JP 2009-72987 A bekannt.

Es ist daher Aufgabe der Erfindung, ein Verfahren zum Herstellen einer Formteilanordnung vorzuschlagen, welches gegenüber bekannten Verfahren Vorteile aufweist, insbesondere auf einfache Art und Weise eine prozesssichere Überwachung des Laserschweißens und ein Erkennen auf Ausschuss ermöglicht.

Dies wird erfindungsgemäß mit einem Verfahren mit den Merkmalen des Anspruchs 1 erreicht. Dabei ist vorgesehen, dass das zweite Kunststoffformteil mehrschichtig ausgebildet wird, wobei die Schichten des zweiten Kunststoffformteils aus unterschiedlichen Materialien bestehen und die zweite Schweißfläche von nur einer Untermenge der Schichten ausgebildet wird.

Insgesamt ist also vorgesehen, zunächst das zweite Kunststoffformteil, insbesondere dessen Schweißbereich, in der gestuften Aufnahme des ersten Kunststoffformteils anzuordnen. Anschließend werden das erste Kunststoffformteil und das zweite Kunststoffformteil während des Laserschweißens aufeinander zu verlagert. Die dabei verwendete Verlagerungsrichtung liegt bevorzugt in Richtung einer Längsmittelachse des ersten Kunststoffformteils und/oder des zweiten Kunststoffformteils vor. Die Längsmittelachse des ersten Kunststoffformteils und/oder die Längsmittelachse des zweiten Kunststoffformteils entsprechen beispielsweise der Längsmittelachse einer in dem jeweiligen Kunststoffformteil vorliegenden Ausnehmung, im Falle des ersten Kunststoffformteils also insbesondere der Aufnahme.

Zumindest das erste Kunststoffformteil verfügt über eine spezielle Ausgestaltung beziehungsweise Formgebung. So weist es die gestufte Aufnahme auf, die zur wenigstens bereichsweisen Aufnahme des zweiten Kunststoffformteils beziehungsweise des Schweißbereichs ausgebildet ist. Umgekehrt kann selbstverständlich das zweite Kunststoffformteil die gestufte Aufnahme aufweisen, die dann zur wenigstens bereichsweisen Aufnahme des ersten Kunststoffformteils beziehungsweise des Schweißbereichs des ersten Kunststoffformteils vorgesehen ist. Unter der gestuften Aufnahme ist eine Ausnehmung des jeweiligen Kunststoffformteils zu verstehen, die in Richtung einer Längsmittelachse des Kunststoffformteils unterschiedliche Querschnitte aufweist, also in in axialer Richtung voneinander beabstandeten Querschnitten über unterschiedliche Abmessungen beziehungsweise Querschnittsflächen verfügt. Der Schweißbereich ist ein Bereich beziehungsweise Teilbereich des jeweils anderen Kunststoffformteils, also des ersten Kunststoffformteils oder des zweiten Kunststoffformteils, welches mittels des Laserschweißens formschlüssig mit dem die Aufnahme aufweisenden Kunststoffformteil verbunden wird.

Der Einfachheit wegen wird nachfolgend stets nur auf eine Ausführungsform eingegangen, bei der das erste Kunststoffformteil die Aufnahme aufweist, in der das zweite Kunststoffformteil angeordnet wird beziehungsweise werden kann. Selbstverständlich sind die jeweiligen Ausführungen jedoch stets auf eine Ausführungsform übertragbar, für welche dies umgekehrt ist, also das zweite Kunststoffformteil die Aufnahme aufweist, in der das erste Kunststoffformteil anordenbar ist.

In der Aufnahme ist für das formschlüssige Verbinden mittels Laserschweißen eine Stufe ausgebildet, durch welche die Abmessungen beziehungsweise die Querschnittsfläche verändert wird. Bevorzugt stellt die Stufe ein Anlageelement beziehungsweise einen Endanschlag für das zweite Kunststoffformteil dar. An der Stufe liegt insoweit eine Anlagefläche für das zweite Kunststoffformteil vor. Bevorzugt ist es vorgesehen, das zweite Kunststoffformteil in die gestufte Aufnahme einzubringen, bis es an der Stufe anliegt. Anschließend wird das Laserschweißen durchgeführt. Während des Laserschweißens werden das zweite Kunststoffformteil und das erste Kunststoffformteil, insbesondere dessen Stufe, aneinandergepresst. Aufgrund des durch das Laserschweißen aufgeschmolzenen ersten Materials und/oder zweiten Materials können die beiden Kunststoffformteile aufeinander zu verlagert werden, was durch das Aufprägen einer entsprechenden Verlagerungskraft auf das erste Kunststoffformteil und/oder das zweite Kunststoffformteil bewirkt wird.

Bevorzugt ist die Aufnahme wenigstens bereichsweise, insbesondere vollständig, zylindrisch, insbesondere kreiszylindrisch. In Abhängigkeit von einer Ausrichtung der Stufe können sich jedoch auch andere Formen der Aufnahme ergeben. Anders ausgedrückt kann es vorgesehen sein, dass die Aufnahme abseits der Stufe zylindrisch, insbesondere kreiszylindrisch ist, besonders bevorzugt vollständig. Die Aufnahme erstreckt sich beispielsweise - zumindest in axialer Richtung gesehen - von der Stufe bis hin zu einer der Stufe gegenüberliegenden Mündungsöffnung der Aufnahme.

Zum Durchführen des Laserschweißens wird der Laserstrahl erzeugt, welcher nachfolgend das erste Kunststoffformteil und/oder das zweite Kunststoffformteil bereichsweise aufschmilzt. Der Laserstrahl ist in radialer Richtung nach innen oder nach außen gerichtet. In ersterem Fall wird eine Außenverschweißung von - in radialer Richtung - außen und in letzterem Fall eine Innenverschweißung von - in radialer Richtung - innen vorgenommen. Unter der Ausrichtung des Laserstrahls in radialer Richtung ist zu verstehen, dass eine radiale Komponente seiner Ausrichtung beziehungsweise seines Ausrichtungsvektors von Null verschieden ist, oder dass der Laserstrahl ausschließlich in radialer Richtung verläuft, die radiale Komponente also die einzige von Null verschiedene Komponente der Ausrichtung des Laserstrahls ist.

Der Laserstrahl kann bereits erzeugt werden, bevor das zweite Kunststoffformteil in der Aufnahme angeordnet ist, wenn also das zweite Kunststoffformteil außerhalb der Aufnahme vorliegt. Alternativ kann es vorgesehen sein, dass der Laserstrahl bereits während des Einbringens des zweiten Kunststoffformteils in die Aufnahme erzeugt wird, also bevor das zweite Kunststoffformteil an der Stufe anliegt. Besonders bevorzugt wird jedoch zunächst das zweite Kunststoffformteil soweit als möglich in die Aufnahme eingebracht, insbesondere also bis es an der Stufe des ersten Kunststoffformteils anliegt. Erst anschließend wird der Laserstrahl zum Durchführen des Laserschweißens erzeugt und während des Vorliegens des Laserstrahls die beiden Kunststoffformteile aufeinander zu verlagert.

Das Aufeinanderzuverlagern erfolgt bevorzugt durch das Ausüben einer entsprechenden Verlagerungskraft auf das erste Kunststoffformteil und/oder das zweite Kunststoffformteil. Es kann vorgesehen sein, die Verlagerungskraft bereits vor dem Erzeugen des Laserstrahls auf das erste Kunststoffformteil und/oder das zweite Kunststoffformteil aufzuprägen. Zusätzlich oder alternativ kann es vorgesehen sein, die Verlagerungskraft auch nach einem Deaktivieren des Laserstrahls in Form einer Haltekraft zumindest über eine bestimmte Haltezeit, insbesondere genau über die bestimmte Haltezeit, auf das erste Kunststoffformteil und/oder das zweite Kunststoffformteil aufzuprägen.

Zum Verlagern der Kunststoffformteile aufeinander zu beziehungsweise zum Aufprägen der Verlagerungskraft kann eines der Kunststoffformteile ortsfest gehalten werden und das jeweils andere mit der Verlagerungskraft beaufschlagt werden beziehungsweise tatsächlich verlagert werden. Es kann insoweit vorgesehen sein, dass zum Verlagern des ersten Kunststoffformteils und des zweiten Kunststoffformteils aufeinander zu nur das erste Kunststoffformteil, nur das zweite Kunststoffformteil oder beide Kunststoffformteile verlagert wird/werden.

Im Rahmen der Erfindung ist vorgesehen, dass in der Aufnahme eine zumindest mit einer Teilfläche in einer ersten Rotationsfläche liegende sowie dem zweiten Kunststoffformteil zugewandte erste Schweißfläche des ersten Kunststoffformteils und an dem zweiten Kunststoffformteil eine stirnseitige, in einer zweiten Rotationsfläche liegende sowie dem ersten Kunststoffformteil zugewandte zweite Schweißfläche ausgebildet wird, wobei die erste Schweißfläche und die zweite Schweißfläche während des Laserschweißens aneinander anliegen oder sich über ein Einlegeteil aneinander abstützen. Die erste Schweißfläche, insbesondere die Teilfläche, kann einen Endanschlag für das zweite Kunststoffformteil bilden. Jedes der Kunststoffformteile weist jeweils eine solche Schweißfläche auf. Die zweite Schweißfläche bildet wenigstens bereichsweise den Schweißbereich des zweiten Kunststoffformteils aus. Während des Laserschweißens liegen die beiden Schweißflächen, also die erste Schweißfläche und die zweite Schweißfläche, bevorzugt aneinander an. Insbesondere werden sie durch die Verlagerungskraft aneinander angepresst. Alternativ kann zwischen den Schweißflächen das Einlegeteil vorliegen.

Beispielsweise wird die erste Schweißfläche des ersten Kunststoffformteils zumindest bereichsweise von der Stufe der Aufnahme gebildet. Die erste Schweißfläche liegt wenigstens bereichsweise in der ersten Rotationsfläche, nämlich zumindest mit ihrer Teilfläche. Besonders bevorzugt liegt die erste Schweißfläche jedoch vollständig in der ersten Rotationsfläche. Die erste Rotationsfläche kann vollständig in einer Ebene liegen beziehungsweise einer solchen entsprechen. Die Rotationsfläche entsteht bevorzugt durch Rotation einer Linie, insbesondere einer geraden Linie, um die Längsmittelachse des ersten Kunststoffformteils. Sie liegt insoweit als Linienrotationsfläche, insbesondere als plane Linienrotationsfläche, vor. Die Linie beziehungsweise ihre gedachte Verlängerung steht beispielsweise senkrecht auf der Längsmittelachse oder ist gegenüber dieser angewinkelt. In letzterem Fall schneidet - im Längsschnitt gesehen - eine die Linie in sich aufnehmende Gerade die Längsmittelachse unter einem von 90° verschiedenen Winkel. Die erste Schweißfläche beziehungsweise ihre Teilfläche ist beispielsweise ringförmig, bevorzugt kreisringförmig. Sie kann als Kegelmantelabschnittsfläche vorliegen.

Die zweite Schweißfläche ist dem zweiten Kunststoffformteil zugeordnet und liegt stirnseitig an diesem vor. Die zweite Schweißfläche liegt in der zweiten Rotationsfläche, insbesondere vollständig. Grundsätzlich gilt für die zweite Rotationsfläche das für die erste Rotationsfläche Gesagte. Sie kann insoweit vollständig in einer Ebene liegen oder einer solchen entsprechen. Sie entsteht vorzugsweise durch die Rotation einer Linie, beispielsweise einer geraden Linie, um die Längsmittelachse des zweiten Kunststoffformteils. Sie beziehungsweise ihre gedachte Verlängerung kann senkrecht auf der Längsmittelachse stehen oder bezüglich dieser angewinkelt sein, wobei - im Längsschnitt gesehen - eine die Linie in sich aufnehmende Gerade die Längsmittelachse unter einem Winkel schneidet, der von 90° verschieden ist. Die zweite Schweißfläche kann ebenfalls ringförmig, insbesondere kreisringförmig sein, beispielsweise falls das zweite Kunststoffformteil als Fluidleitung vorliegt, oder als Kegelmantelabschnittsfläche ausgestaltet sein.

Die die erste Rotationsfläche und/oder die zweite Rotationsfläche definierende Linie kann aus einem einzigen Linienteil bestehen, der bevorzugt gerade ist. Alternativ kann sie jedoch aus mehreren aneinander angrenzenden Linienteilen bestehen, wobei wenigstens einer der Linienteile gerade ist. Beispielsweise sind mehrere oder alle der Linienteile gerade. Es kann vorgesehen sein, dass zwei gerade Linienteile von einem weiteren Linienteil miteinander verbunden sind, der ungerade ist, beispielsweise gekrümmt verläuft, insbesondere mit einer konstanten Krümmung. Der weitere Linienteil kann jedoch ebenfalls gerade sein und ist hierbei besonders bevorzugt gegenüber den jeweils angrenzenden Linienteilen angewinkelt, schließt mit diesen also jeweils einen Winkel ein, der größer als 0° und kleiner als 180° ist. Weiterhin ist der weitere Linienteil vorzugsweise kürzer als zumindest einer der an ihn angrenzenden Linienteile oder als beide angrenzenden Linienteile. Entsprechend weist die jeweilige Rotationsfläche zwei Teilflächen auf, die über eine Fase miteinander verbunden sind.

Das Einlegeteil - sofern vorgesehen - wird vorzugsweise während des Laserschweißens aufgeschmolzen, insbesondere vollständig. Es überträgt, zumindest insoweit es noch nicht aufgeschmolzen ist, die Verlagerungskraft und/oder die Haltekraft zwischen den Kunststoffformteilen. Zum Aufschmelzen besteht es zum Beispiel aus laserabsorbierendem Material, sodass es von dem Laserstrahl erwärmt und unmittelbar aufgeschmolzen wird. In diesem Fall kann es vorgesehen sein, dass von dem Einlegeteil Wärme auf das erste Kunststoffformteil und/oder das zweite Kunststoffformteil übertragen wird, sodass zumindest eines, insbesondere beide der Kunststoffformteile ebenfalls aufgeschmolzen wird/werden. Hierbei können die Kunststoffformteile jeweils wahlweise aus lasertransparentem oder laserabsorbierendem Material bestehen. Es kann jedoch auch durch Wärmeübertragung von dem ersten Kunststoffformteil und/oder dem zweiten Kunststoffformteil erwärmt und schließlich aufgeschmolzen werden. Bei einer derartigen Ausführungsform kann das Einlegeteil aus einem lasertransparenten Material, aber auch aus einem laserabsorbierenden Material bestehen.

Eine weitere Ausgestaltung der Erfindung sieht vor, dass die erste Schweißfläche und die zweite Schweißfläche derart ausgebildet werden, dass die erste Rotationsfläche und die zweite Rotationsfläche - im Längsschnitt gesehen - parallel zueinander oder gegeneinander angewinkelt sind, und/oder dass die erste Rotationsfläche und/oder die zweite Rotationsfläche senkrecht auf der Verlagerungsrichtung stehen. Vorstehend wurde bereits erläutert, dass die erste Rotationsfläche zumindest teilweise die erste Schweißfläche und die zweite Rotationsfläche die zweite Schweißfläche definiert. Die beiden Schweißflächen sollen nun derart ausgestaltet sein, dass sich eine bestimmte Anordnung der beiden Rotationsflächen zueinander und/oder zu der Verlagerungsrichtung ergibt. Zum einen können die beiden Rotationsflächen im Längsschnitt parallel zueinander verlaufen. Hierbei stehen sie bevorzugt jeweils senkrecht auf der Verlagerungsrichtung beziehungsweise der Längsmittelachse.

Es kann jedoch auch vorgesehen sein, dass die beiden Rotationsflächen gegeneinander angewinkelt sind. Hierbei ist es bevorzugt vorgesehen, dass zumindest die zweite Rotationsfläche weiterhin senkrecht auf der Verlagerungsrichtung steht, sodass die erste Rotationsfläche gegenüber der Verlagerungsrichtung schräg angeordnet ist, also mit ihr einen Winkel einschließt, der von 90° verschieden ist. Selbstverständlich können auch beide Rotationsflächen schräg bezüglich der Verlagerungsrichtung angeordnet sein. Bevorzugt sind sie hierbei gegeneinander angewinkelt, sodass sie mit der Verlagerungsrichtung unterschiedliche Winkel einschließen. Besonders bevorzugt kann es hierbei vorgesehen sein, dass - im Längsschnitt auf derselben Seite der Längsmittelachse gesehen - die erste Rotationsfläche in eine erste Richtung und die zweite Rotationsfläche in eine von der ersten Richtung verschiedene zweite Richtung gegenüber der Verlagerungsrichtung angewinkelt ist.

Eine bevorzugte weitere Ausgestaltung der Erfindung sieht vor, dass die erste Schweißfläche mit wenigstens einer weiteren Teilfläche ausgebildet wird, die gegenüber der Teilfläche angewinkelt ist. Die erste Schweißfläche setzt sich also nicht lediglich aus der Teilfläche zusammen, sondern weist neben dieser die wenigstens eine weitere Teilfläche auf. Sowohl die Teilfläche als auch die weitere Teilfläche liegen bevorzugt als Rotationsfläche vor, oder sind eben beziehungsweise plan. Die beiden Teilflächen sind gegeneinander angewinkelt, fluchten also - im Längsschnitt gesehen - nicht miteinander. Grundsätzlich kann sich die erste Schweißfläche aus der Teilfläche sowie einer beliebigen Anzahl an weiteren Teilflächen zusammensetzen. Die weiteren Teilflächen liegen dabei bevorzugt in radialer Richtung innenseitig der Teilfläche. Sowohl die Teilfläche als auch die wenigstens eine weitere Teilfläche können ringförmig, insbesondere kreisringförmig sein. Sind mehrere weitere Teilflächen vorgesehen, so sind diese bevorzugt - wiederum im Längsschnitt gesehen - ebenfalls gegeneinander angewinkelt.

Im Rahmen einer weiteren vorteilhaften Ausgestaltung der Erfindung ist vorgesehen, dass die erste Schweißfläche an eine Innenumfangsfläche des ersten Kunststoffformteils und die zweite Schweißfläche an eine Außenumfangsfläche des zweiten Kunststoffformteils angrenzt, wobei die Innenumfangsfläche und die Außenumfangsfläche - in Umfangsrichtung gesehen zumindest abschnittsweise - mit Spielpassung oder Übergangspassung zueinander angeordnet werden. Die Innenumfangsfläche des ersten Kunststoffformteils begrenzt die Aufnahme des ersten Kunststoffformteils in radialer Richtung nach außen. Bevorzugt ist sie zylindrisch, insbesondere kreiszylindrisch. Auch die Außenumfangsfläche des zweiten Formteils kann zylindrisch oder kreiszylindrisch sein. Die Außenumfangsfläche und die Innenumfangsfläche sind bevorzugt aneinander formangepasst, weisen also beispielsweise die gleiche Form, nicht notwendigerweise jedoch die gleichen Abmessungen auf.

Es kann jedoch auch vorgesehen sein, dass das erste Kunststoffformteil in der Aufnahme in radialer Richtung nach innen vorspringende Rippen aufweist. Bevorzugt sind jeweils zwei dieser Rippen bezüglich der Längsmittelachse des ersten Kunststoffformteils einander diametral gegenüberliegend angeordnet. Weiter bevorzugt sind die Rippen in Umfangsrichtung gleichmäßig verteilt angeordnet. Die Haupterstreckungsrichtung der Rippen liegt vorzugsweise in axialer Richtung vor, sodass Längsmittelachse der Rippen parallel zu der Längsmittelachse des ersten Kunststoffformteils verlaufen.

Zusätzlich oder alternativ kann das zweite Kunststoffformteil, insbesondere an seinem Schweißbereich, in radialer Richtung nach außen vorspringende Rippen aufweisen. Auch hier können jeweils zwei der Rippen bezüglich der Längsmittelachse des zweiten Kunststoffformteils einander diametral gegenüberliegend angeordnet und/oder in Umfangsrichtung gleichmäßig verteilt angeordnet sein. Die Haupterstreckungsrichtung der Rippen liegt wiederum vorzugsweise in axialer Richtung vor, sodass Längsmittelachsen der Rippen parallel zu der Längsmittelachse des zweiten Kunststoffformteils verlaufen.

Zusammenfassend können also an jedem der beiden Kunststoffformteile jeweils Rippen vorliegen, die in radialer Richtung in die Richtung des jeweils anderen Kunststoffformteils ragen. Ebenso kann es jedoch vorgesehen sein, dass lediglich an einem der beiden Kunststoffformteile die Rippen angeordnet sind, während das jeweils andere Kunststoffformteil die zylindrische oder kreiszylindrische Außenumfangsfläche beziehungsweise Innenumfangsfläche aufweist. Die Rippen sind dabei derart ausgestaltet, dass sie an dem jeweils anderen Kunststoffformteil anliegen, insbesondere mit Presspassung. Hierdurch wird auf einfache Art und Weise eine sehr genaue Zentrierung der beiden Kunststoffformteile gegeneinander erzielt. In Umfangsrichtung gesehen liegt also die Außenumfangsfläche im Bereich der Rippen an der Innenumfangsfläche an, insbesondere mit Presspassung, während sie in zwischen den Rippen liegenden Bereichen von ihr beabstandet ist oder nur mit Spielpassung oder Übergangspassung an ihr anliegt. Umgekehrt gilt dies selbstredend für die Innenumfangsfläche, die in Umfangsrichtung gesehen bereichsweise an der Innenumfangsfläche anliegt und bereichsweise von ihr beabstandet ist oder mit geringerer Flächenpressung, insbesondere mit Spielpassung oder Übergangspassung, an der Außenumfangsfläche anliegt.

Die beiden Kunststoffformteile sind insoweit derart ausgestaltet, dass die Innenumfangsfläche und die Außenumfangsfläche bei Anordnung des zweiten Kunststoffformteils in der Aufnahme des ersten Kunststoffformteils - in Umfangsrichtung gesehen - jedenfalls nicht durchgehend mit Presspassung aneinander anliegen, sondern dass zwischen ihnen zumindest bereichsweise allenfalls Spielpassung oder Übergangspassung vorliegt oder sie in radialer Richtung voneinander beabstandet sind. Durch eine derartige Ausgestaltung der Kunststoffformteile soll eine Wärmeübertragung von dem zweiten Kunststoffformteil auf das erste Kunststoffformteil über die Außenumfangsfläche und die Innenumfangsfläche vermieden werden. Die Wärmeübertragung soll insoweit vorzugsweise zumindest größtenteils, insbesondere ausschließlich, über die Schweißflächen erfolgen.

Im Rahmen einer weiteren Ausführungsform der Erfindung ist vorgesehen, dass ein zum Laserschweißen verwendeter Laserstrahl die erste Rotationsfläche in sich aufnimmt, insbesondere mittig, oder benachbart, insbesondere unmittelbar benachbart, zu der ersten Rotationsfläche angeordnet wird. Diese Anordnung des Laserstrahls ist vorzugsweise zumindest unmittelbar zu Beginn des Laserschweißens, besonders bevorzugt jedoch während des gesamten Laserschweißens realisiert. Die erstgenannte Anordnung, gemäß welcher der Laserstrahl die erste Rotationsfläche aufnimmt, kann als optimal angesehen werden, weil so ein Toleranzausgleich bezüglich einer Anordnung der Kunststoffformteile zueinander realisiert ist. Zumindest ein Teil des Laserstrahls trifft nach dem Durchtreten des aus dem lasertransparenten Material bestehenden Kunststoffformteils also unmittelbar auf das jeweils andere Kunststoffformteil.

Der Laserstrahl kann jedoch auch benachbart zu der ersten Rotationsfläche angeordnet sein, insbesondere unmittelbar benachbart. Unter der unmittelbar benachbarten Anordnung ist zu verstehen, dass sich der Laserstrahl unmittelbar an die erste Rotationsfläche anschließt, diese jedoch gerade nicht in sich aufnimmt. Für die benachbarte Anordnung ergeben sich zwei verschiedene Varianten. Bei einer ersten ist der Laserstrahl derart angeordnet, dass er vollständig auf der dem zweiten Kunststoffformteil abgewandten Seite der ersten Rotationsfläche vorliegt. Entsprechend trifft der Laserstrahl nicht oder zumindest nicht unmittelbar auf das zweite Kunststoffformteil. Das Laserschweißen erfolgt bei einer derartigen Ausrichtung des Laserstrahls zumindest teilweise durch ein Erwärmen des aus dem laserabsorbierenden Material bestehenden Kunststoffformteils, von welchem aus die von dem Laserstrahl bewirkte Wärme auf das jeweils andere Kunststoffformteil übertragen wird, sodass das vorstehend beschriebene Aufschmelzen des ersten Materials und/oder des zweiten Materials erfolgt. Zusätzlich oder alternativ kann ein Teil des Laserstrahls durch Brechung in dem ersten Kunststoffformteil und/oder dem zweiten Kunststoffformteil in das aus dem laserabsorbierenden Material bestehende Kunststoffformteil gelangen und dieses erwärmen und letztendlich aufschmelzen.

In einer zweiten Variante ist der Laserstrahl vollständig auf der dem zweiten Kunststoffformteil zugewandten Seite der ersten Rotationsfläche angeordnet. Insoweit kann davon ausgegangen werden, dass der gesamte Laserstrahl nach dem Durchtreten des aus dem lasertransparenten Material bestehenden Kunststoffformteils auf das jeweils andere Kunststoffformteil trifft und dieses erwärmt. Somit wird zwar der Wärmeeintrag in das letztgenannte Kunststoffformteil optimiert; der Laserstrahl trifft jedoch nicht oder lediglich teilweise auf das bereits aufgeschmolzene erste Material und/oder zweite Material, welches/welche in einer Mischzone des ersten Materials und des zweiten Materials vorliegt.

Eine weitere bevorzugte Ausgestaltung der Erfindung sieht vor, dass der Laserstrahl bezüglich des ersten Kunststoffformteils und/oder des zweiten Kunststoffformteils ortsfest positioniert wird. Vorstehend wurde erläutert, dass die beiden Kunststoffformteile während des Laserschweißens aufeinander zu verlagert werden. Um das Laserschweißen mittels des Laserstrahls durchführen zu können, muss der Laserstrahl entsprechend ausgerichtet sein. Er ist hierzu bezüglich wenigstens eines der Kunststoffformteile ortsfest. Ist beispielsweise eine Verlagerung des ersten Kunststoffformteils in Richtung des zweiten Kunststoffformteils vorgesehen, so kann der Laserstrahl gemeinsam mit dem ersten Kunststoffformteil verlagert werden. Ist das erste Kunststoffformteil dagegen ortsfest und wird das zweite Kunststoffformteil auf das erste Kunststoffformteil zu verlagert, so kann der Laserstrahl ebenfalls ortsfest sein. Hierunter wird bevorzugt verstanden, dass der Laserstrahl bezüglich der jeweiligen Schweißfläche oder der jeweiligen Rotationsfläche ortsfest ist. Bei einem Aufeinanderzuverlagern der beiden Kunststoffformteile kann insoweit auch eine bezüglich beider Kunststoffformteile ortsfeste Anordnung realisiert sein, insbesondere durch eine in absoluter Hinsicht ortsfeste Anordnung des Laserstrahls.

Eine weitere Ausgestaltung der Erfindung sieht vor, dass der Laserstrahl parallel zu der ersten Rotationsfläche ausgerichtet oder bezüglich der ersten Rotationsfläche angewinkelt wird, wobei die erste Schweißfläche wenigstens teilweise, insbesondere vollständig, in dem Laserstrahl liegt. Grundsätzlich kann der Laserstrahl beliebig ausgerichtet sein, solange er das Verschweißen der beiden Kunststoffformteile miteinander bewirkt. Bevorzugt liegt er parallel zu der ersten Rotationsfläche vor, zumindest im Längsschnitt auf einer Seite der Längsmittelachse. Er kann jedoch auch bezüglich der ersten Rotationsfläche angewinkelt sein. Im Falle der angewinkelten Ausrichtung ist es bevorzugt vorgesehen, dass der Laserstrahl die erste Schweißfläche schneidet. Besonders bevorzugt wird die Weite des Laserstrahls dabei derart gewählt, dass die gesamte erste Schweißfläche oder zumindest ihre Teilfläche in dem Laserstrahl liegt.

Gemäß der Erfindung ist es vorgesehen, dass das zweite Kunststoffformteil mehrschichtig ausgebildet wird, wobei die Schichten des zweiten Kunststoffformteils aus unterschiedlichen Materialien, vorzugsweise aus Materialien mit unterschiedlichen Schmelztemperaturen, bestehen und die zweite Schweißfläche von nur einer Untermenge der Schichten ausgebildet wird. Das zweite Kunststoffformteil besteht insoweit aus mehreren Schichten, welche insbesondere in radialer Richtung bezüglich einer Längsmittelachse des ersten Kunststoffformteils aufeinanderfolgend angeordnet sind. Eine erste Schicht wird beispielsweise von einer zweiten Schicht in Umfangsrichtung zumindest teilweise, insbesondere vollständig umgriffen. Diese zweite Schicht kann ihrerseits von einer dritten Schicht in Umfangsrichtung wenigstens teilweise, insbesondere vollständig, umgriffen sein. Auf diese kann wiederum eine weitere Schicht oder eine beliebige Anzahl an weiteren Schichten folgen. Grundsätzlich kann eine beliebige Anzahl schon Schichten vorgesehen sein, beispielsweise genau zwei Schichten oder genau drei Schichten. Die mehreren Schichten verlaufen bevorzugt jeweils in axialer Richtung durchgehend, insbesondere jeweils über die gesamte Längserstreckung des zweiten Kunststoffformteils. Das zweite Kunststoffformteil kann jedoch alternativ auch lediglich auf seiner dem ersten Kunststoffformteil zugewandten Seite, insbesondere in dem in der Aufnahme aufgenommenen Schweißbereich mehrschichtig aufgebaut sein oder dort eine Anzahl an Schichten aufweisen, die von der in einem anderen Bereich vorliegenden Anzahl verschieden ist.

Die Schichten des zweiten Kunststoffformteils oder zumindest unmittelbar benachbarte der Schichten bestehen aus unterschiedlichen Materialien, bevorzugt aus Materialien mit unterschiedlichen Schmelztemperaturen. Die Schmelztemperaturen der Materialien können dabei derart gewählt werden, dass lediglich genau eine oder nur ein Teil der Schichten während des Laserschweißens durch den Laserstrahl aufgeschmolzen wird. Alternativ oder zusätzlich ist das Material wenigstens einer der Schichten lasertransparent und das Material wenigstens einer anderen der Schichten laserabsorbierend. Entsprechend wird die Schweißfläche nur von wenigstens einer der Schichten, also beispielsweise nur einer der Schichten oder nur einer Untermenge der Schichten, ausgebildet. Die Untermenge umfasst dabei lediglich einen Teil der Schichten des zweiten Kunststoffformteils. Beispielsweise besteht nur eine der Schichten aus dem zweiten Material. Alternativ können mehrere, insbesondere aneinander angrenzende oder voneinander beabstandete Schichten aus dem zweiten Material hergestellt sein.

Eine weitere Ausgestaltung der Erfindung sieht vor, dass das erste Kunststoffformteil und/oder das zweite Kunststoffformteil und/oder das Einlegeteil jeweils aus einem lasertransparenten oder einem laserabsorbierenden Material hergestellt werden. In Abhängigkeit von der beabsichtigten Vorgehensweise, beispielsweise ob eine Außenverschweißung oder eine Innenverschweißung realisiert werden soll, können sich grundsätzlich beliebige Kombinationen des Materials für das erste Kunststoffformteil, das zweite Kunststoffformteil und das Einlegeteil ergeben. Zum Beispiel besteht bevorzugt bei einer Außenverschweißung das erste Kunststoffformteil aus einem lasertransparenten Material und das zweite Kunststoffformteil aus einem laserabsorbierenden Material; bei einer Innenverschweißung kann dies anders herum sein. Falls das Einlegeteil vorgesehen ist, können beide Kunststoffformteile aus lasertransparentem Material bestehen. Das Einlegeteil ist dann aus laserabsorbierendem Material. Wenigstens eines der Kunststoffformteile, also zum Beispiel auch beide Kunststoffformteile, kann/können jedoch auch dann aus laserabsorbierendem Material bestehen. Falls unterschiedliche Elemente jeweils aus laserabsorbierendem Material oder lasertransparentem Material bestehen sollen, bedeutet dies nicht zwangsweise, dass dasselbe Material verwendet wird. Vielmehr können selbstredend unterschiedliche laserabsorbierende Materialien oder unterschiedliche lasertransparente Materialien zum Einsatz kommen.

Im Rahmen einer weiteren Ausführungsform der Erfindung kann vorgesehen sein, dass die Relativposition des ersten Kunststoffformteils und des zweiten Kunststoffformteils zueinander über der Zeit, insbesondere zu wenigstens einem Zeitpunkt, erfasst und zur Qualitätssicherung der Formteilanordnung ausgewertet wird. Der Messzeitraum, in welchem die Relativposition zumindest einmalig erfasst wird, umfasst beispielsweise einen Schweißzeitraum, der sich beispielsweise von einem Beginn des Laserschweißens, also ab dem Erzeugen des Laserstrahls, bis zum Ende des Laserschweißens, also dem Abschalten des Laserstrahls, erstreckt. Zusätzlich kann der Messzeitraum einen Haltezeitraum umfassen, der sich unmittelbar an das Laserschweißen beziehungsweise den Schweißzeitraum anschließt, also an das Abschalten des Laserstrahls. Der Haltezeitraum erstreckt sich bevorzugt über eine bestimmte Zeitspanne, während welcher die beiden Kunststoffformteile weiter aufeinander zu verlagert werden oder zumindest die Verlagerungskraft weiter auf sie aufgeprägt wird.

Innerhalb des Messzeitraums wird die Relativposition wenigstens einmalig, insbesondere mehrmals, besonders bevorzugt kontinuierlich oder periodisch, erfasst. Entspricht die Relativposition einem Sollwert oder liegt sie in einem Sollwertbereich, so wird davon ausgegangen, dass die Formteilanordnung in Ordnung ist. Weicht dagegen die Relativposition von der Sollposition ab oder liegt sie außerhalb des Sollwertbereichs, so wird auf eine nicht ordnungsgemäß hergestellte Formteilanordnung erkannt. Der Sollwert beziehungsweise der Sollwertbereich ist dabei selbstverständlich abhängig von dem Zeitpunkt, in welchem die Relativposition erfasst wird. Wird in dem Messzeitraum die Relativposition mehrmals erfasst, insbesondere also in Form eines Relativpositionsverlaufs, so kann dieser Relativpositionsverlauf mit einem Sollwertverlauf oder dem Sollwertbereich verglichen werden. Entspricht er diesem beziehungsweise liegt er in diesem, so wird wiederum auf eine ordnungsgemäß hergestellte Formteilanordnung geschlossen, während anderenfalls auf die nicht ordnungsgemäß hergestellte Formteilanordnung erkannt wird.

Beschrieben wird weiterhin eine nicht erfindungsgemäße Herstellungseinrichtung zur Herstellung einer Formteilanordnung aus einem ersten Kunststoffformteil und einem zweiten Kunststoffformteil mittels Laserschweißen, insbesondere zur Durchführung des vorstehend beschriebenen Verfahrens, wobei das erste Kunststoffformteil zumindest teilweise aus einem ersten Material und das zweite Kunststoffformteil zumindest teilweise aus einem mit dem ersten Material verschweißbaren zweiten Material besteht, wobei vorgesehen ist, einen Schweißbereich des zweiten Kunststoffformteils in einer gestuften Aufnahme des ersten Kunststoffformteils oder umgekehrt anzuordnen. Dabei ist die Herstellungseinrichtung dazu ausgebildet, das erste Kunststoffformteil und das zweite Kunststoffformteil während des Laserschweißens in einer Verlagerungsrichtung aufeinander zu zu verlagern.

Auf die Vorteile einer derartigen Vorgehensweise beziehungsweise einer derartigen Ausgestaltung der Herstellungseinrichtung beziehungsweise der Formteilanordnung wurde bereits hingewiesen. Sowohl das Verfahren als auch die Herstellungseinrichtung zu dessen Durchführung können gemäß den vorstehenden Ausführungen weitergebildet sein.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Formteilanordnung mit einem ersten Kunststoffformteil und einem zweiten Kunststoffformteil in einer nicht erfindungsgemäßen ersten Ausführungsform,
- Figur 2: eine schematische Darstellung der Formteilanordnung in einer nicht erfindungsgemäßen zweiten Ausführungsform,
- Figur 3: eine schematische Darstellung der Formteilanordnung in einer nicht erfindungsgemäßen dritten Ausführungsform,
- Figur 4: eine schematische Darstellung der Formteilanordnung in einer nicht erfindungsgemäßen vierten Ausführungsform,
- Figur 5: eine schematische Darstellung der Formteilanordnung, wobei das zweite Kunststoffformteil erfindungsgemäß mehrschichtig ausgebildet ist,
- Figur 6: eine schematische Darstellung der Formteilanordnung in einer nicht erfindungsmäßen Ausgestaltung, wobei zwischen dem ersten Kunststoffformteil und dem zweiten Kunststoffformteil ein Einlegeteil angeordnet ist, sowie
- Figur 7: ein Diagramm, in welchem eine Relativposition des ersten Kunststoffformteils und des zweiten Kunststoffformteils zueinander über der Zeit aufgetragen ist.

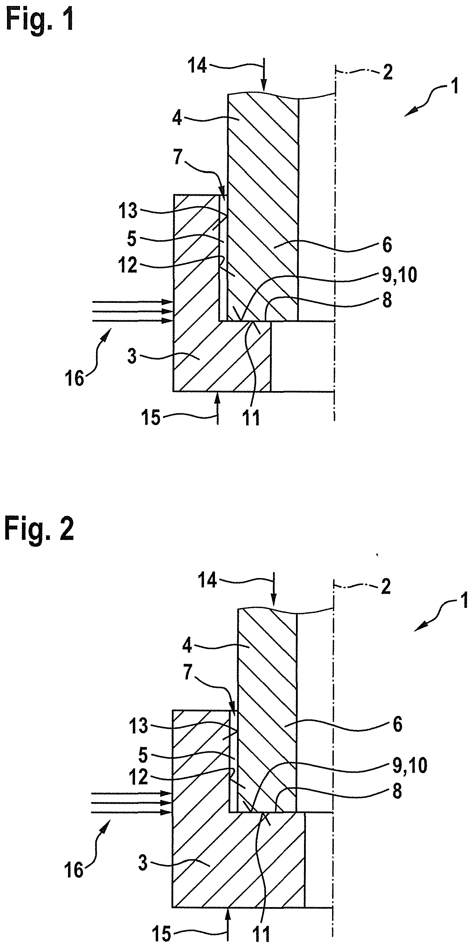

Die Figur 1 zeigt eine schematische Darstellung einer Formteilanordnung 1 in einer nicht erfindungsgemäßen ersten Ausführungsform im Längsschnitt bezüglich einer Längsmittelachse 2. Die Formteilanordnung 1 weist ein erstes Kunststoffformteil 3 und ein zweites Kunststoffformteil 4 auf. Beide Kunststoffformteile 3 und 4 können beispielsweise als Fluidleitungselemente ausgestaltet sein. Sie sind hier jeweils lediglich beispielhaft und schematisch dargestellt. Bevorzugt ist das erste Kunststoffformteil 3 eine Fluidkupplung und das zweite Kunststoffformteil 4 eine Fluidleitung. Die Kunststoffformteile 3 und 4 können grundsätzlich beliebig hergestellt sein, beispielsweise durch Spritzgießen oder Extrudieren. Bevorzugt ist das erste Kunststoffformteil 3 ein Spritzgießformteil und das zweite Kunststoffformteil 4 ein Extrusionsformteil. Auch andere Ausführungsformen sind jedoch möglich.

Das erste Kunststoffformteil 3 weist eine Aufnahme 5 für das zweite Kunststoffformteil 4 beziehungsweise einen Schweißbereich 6 des zweiten Kunststoffformteils 4 auf. Die Aufnahme 5 verfügt über eine stirnseitig an dem ersten Kunststoffformteil 3 ausgebildete Mündungsöffnung 7 und wird auf der der Mündungsöffnung 7 gegenüberliegenden Seite - in axialer Richtung gesehen - von einer Stufe 8 begrenzt. Die Aufnahme 5 ist insoweit als gestufte Aufnahme ausgestaltet. Die Stufe 8 bewirkt eine Veränderung der Abmessungen beziehungsweise der Innenquerschnittsfläche der Aufnahme 5. Sie bildet in dem hier dargestellten Ausführungsbeispiel zudem bevorzugt einen Endanschlag für das zweite Kunststoffformteil 4. Die Kunststoffformteile 3 und 4 sind entsprechend derart ausgestaltet, dass das zweite Kunststoffformteil 4 bis zum Erreichen der Stufe 8 in die Aufnahme 5 eingebracht werden kann und nachfolgend an dieser anliegt beziehungsweise sich an dieser abstützt.

In der Aufnahme ist eine erste Schweißfläche 9 ausgebildet, die zumindest mit einer Teilfläche 10 in einer ersten Rotationsfläche liegt. Die erste Schweißfläche 9 beziehungsweise die Teilfläche 10 ist dem zweiten Kunststoffformteil 4 zugewandt. Bevorzugt wird die erste Schweißfläche 9, insbesondere die Teilfläche 10, von der Stufe 8 gebildet. Die erste Schweißfläche 9 beziehungsweise ihre Teilfläche 10 ist bevorzugt ringförmig, insbesondere kreisringförmig. An dem zweiten Kunststoffformteil 4 ist stirnseitig eine zweite Schweißfläche 11 ausgebildet. Diese liegt in einer zweiten Rotationsfläche vor und ist dem ersten Kunststoffformteil 3 zugewandt. Die zweite Schweißfläche 11 liegt an der ersten Schweißfläche 9, insbesondere an der Teilfläche 10 der ersten Schweißfläche 9, an. In dem hier dargestellten Ausführungsbeispiel ist die Stirnseite des zweiten Kunststoffformteils 4 in radialer Richtung größer als die Stufe 8, sodass das zweite Kunststoffformteil 4 im Querschnitt gesehen nach innen über die Stufe 8 übersteht.

An die erste Schweißfläche 9 schließt sich eine Innenumfangsfläche 12 des ersten Kunststoffformteils 3 an, welche die Aufnahme 5 in radialer Richtung nach außen begrenzt. Die Innenumfangsfläche 12 erstreckt sich in axialer Richtung bevorzugt von der ersten Schweißfläche 9 bis hin zu der Mündungsöffnung 7, durch welche das zweite Kunststoffformteil 4 in die Aufnahme 5 einbringbar ist. Bevorzugt ist die Innenumfangsfläche 12 zylindrisch, insbesondere kreiszylindrisch. Beispielsweise schließt sie mit der ersten Schweißfläche 9 beziehungsweise der Teilfläche 10 einen bestimmten Winkel ein, insbesondere 90°. Die zweite Schweißfläche 11 grenzt hingegen an eine Außenumfangsfläche 13 des zweiten Kunststoffformteils 4 an. Auch die Außenumfangsfläche 13 kann zylindrisch, insbesondere kreiszylindrisch, sein und schließt mit der zweiten Schweißfläche 11 vorzugsweise - in Umfangsrichtung gesehen zumindest bereichsweise oder durchgehend - einen Winkel ein, insbesondere einen Winkel von 90°.

Die Kunststoffformteile 3 und 4 sind derart ausgebildet, dass die Innenumfangsfläche 12 und die Außenumfangsfläche 13 jedenfalls nicht oder allenfalls - in Umfangsrichtung gesehen - bereichsweise mit Presspassung zueinander angeordnet sind, sondern nur mit Spielpassung oder Übergangspassung. Dies ist in der Darstellung durch den Abstand zwischen ihnen angedeutet. Bevorzugt ist es vorgesehen, dass die Außenumfangsfläche 13 von hier nicht dargestellten Rippen mitausgebildet wird, die in Umfangsrichtung voneinander beabstandet an dem Kunststoffformteil 4 ausgebildet sind und in radialer Richtung in Richtung des Kunststoffformteils 3 beziehungsweise der Innenumfangsfläche 12 ragen. Beispielsweise liegt die Außenumfangsfläche 13 - in Umfangsrichtung gesehen - nur im Bereich der Rippen an der Innenumfangsfläche 12 an und in zwischen den Rippen liegenden Bereichen mit geringerer Flächenpressung oder gar nicht. In letzterem Fall ist die Außenumfangsfläche in den zwischen den Rippen liegenden Bereichen also von der Innenumfangsfläche beabstandet angeordnet. Die Rippen weisen ihre jeweilige Längsmittelachse in axialer Richtung auf, also bevorzugt parallel zu der Längsmittelachse 2. Sie dienen einer einfachen und zuverlässigen Zentrierung des Kunststoffformteils 4 bezüglich des Kunststoffformteils 3 und können entsprechend auch als Zentrierrippen bezeichnet werden.

In der hier dargestellten ersten Ausführungsform sind die erste Rotationsfläche und die zweite Rotationsfläche parallel zueinander angeordnet und stehen beide jeweils senkrecht auf der Längsmittelachse 2 beziehungsweise einer durch die Pfeile 14 und 15 angedeuteten Verlagerungsrichtung der Kunststoffformteile 3 und 4, in der diese während eines Laserschweißvorgangs aufeinander zu verlagert werden. Die Verlagerungsrichtung ist vorzugsweise parallel zu der Längsmittelachse 2 oder fällt mit dieser zusammen. Die beiden Rotationsflächen liegen in der hier dargestellten Ausführungsform in derselben Ebene oder zumindest in zwei parallel zueinander angeordneten Ebenen.

Zur Herstellung der Formteilanordnung 1 sollen die Kunststoffformteile 3 und 4 mittels Laserschweißen miteinander verbunden werden. Hierzu wird der Schweißbereich 6 des zweiten Kunststoffformteils 4 in der Aufnahme 5 des ersten Kunststoffformteils 3 angeordnet. Bereits bevor die Schweißflächen 9 und 11 miteinander in Kontakt treten oder nach einem solchen Inkontakttreten wird ein Laserstrahl 16 erzeugt, mittels welchem das Laserschweißen durchgeführt wird. Das erste Kunststoffformteil besteht zumindest teilweise aus einem ersten Material, welches lasertransparent ist, während das zweite Kunststoffformteil 4 zumindest teilweise aus einem zweiten Material besteht, welches laserabsorbierend ist. Das zweite Material ist zudem mit dem ersten Material verschweißbar, kann also durch das Laserschweißen mit ihm stoffschlüssig verbunden werden. Das erste Material und das zweite Material können grundsätzlich verschieden sein oder aus demselben Grundmaterial bestehen, welches durch Zusatzstoffe lasertransparent beziehungsweise laserabsorbierend gemacht ist.

Während des Laserschweißens werden die beiden Kunststoffformteile 3 und 4 bei aneinander liegenden Schweißflächen 9 und 11 aufeinander zu verlagert. Dies wird durch das bereichsweise Aufschmelzen des ersten Kunststoffformteils 3 und/oder des zweiten Kunststoffformteils 4 durch den Laserstrahl 16 ermöglicht. Zum Aufeinanderzuverlagern der Kunststoffformteile 3 und 4 wird eine Verlagerungskraft auf diese aufgeprägt. Beispielsweise wird die Verlagerungskraft in Richtung des Pfeils 14 auf das zweite Kunststoffformteil 4 und/oder in Richtung des Pfeils 15 auf das erste Kunststoffformteil 3 aufgeprägt.

Die Figur 2 zeigt eine schematische Darstellung einer nicht erfindungsgemäßen zweiten Ausführungsform der Formteilanordnung 1. Diese ist grundsätzlich ähnlich zu der ersten Ausführungsform, sodass nachfolgend lediglich auf die Unterschiede eingegangen und ansonsten auf die vorstehenden Ausführungen verwiesen wird. Die Unterschiede liegen darin, dass die Stirnfläche des zweiten Kunststoffformteils 4 in radialer Richtung kleiner ist als die Stufe 8, sodass - im Querschnitt gesehen - die Stirnfläche des zweiten Kunststoffformteils 4 während des Laserschweißens vollständig auf der Stufe 8 aufliegt.

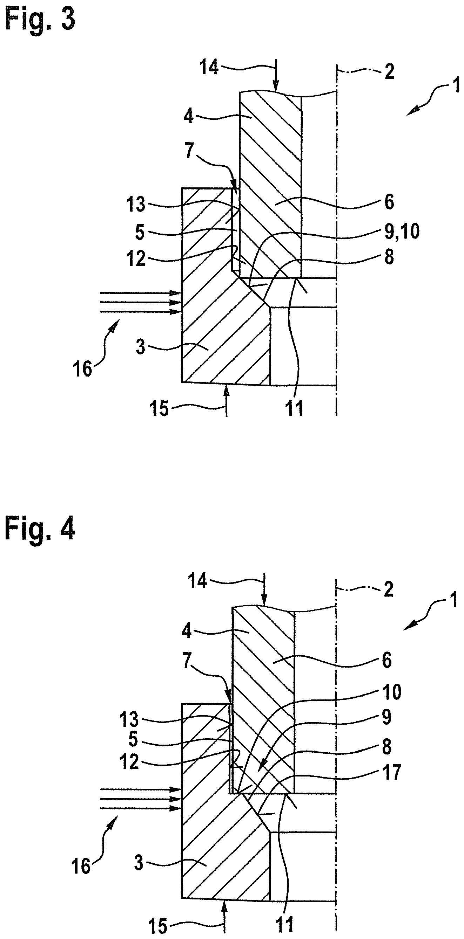

Die Figur 3 zeigt eine nicht erfindungsgemäße dritte Ausführungsform der Formteilanordnung 1. Wiederum wird lediglich auf die Unterschiede zu der ersten Ausführungsform eingegangen und ansonsten auf die vorstehenden Ausführungen verwiesen. Die Unterschiede liegen darin, dass die erste Rotationsfläche, welche die erste Schweißfläche 9 definiert, bezüglich der die zweite Schweißfläche 11 definierenden zweiten Rotationsfläche angewinkelt ist. Zudem ist die erste Rotationsfläche schräg bezüglich der Längsmittelachse 2 beziehungsweise der Verlagerungsrichtung ausgerichtet, schneidet diese also unter einem von 90° verschiedenen Winkel. Die erste Schweißfläche 9 liegt in dem hier dargestellten Ausführungsbeispiel als Kegelmantelabschnittsfläche vor. Die erste Rotationsfläche ist dagegen bevorzugt senkrecht zu der Längsmittelachse 2 ausgerichtet. Sie kann jedoch ebenfalls schräg zu dieser angeordnet sein, ist dabei jedoch bevorzugt bezüglich der ersten Rotationsfläche angewinkelt, insbesondere - im Längsschnitt gesehen - in die andere Richtung geneigt.

Die Figur 4 zeigt eine nicht erfindungsgemäße vierte Ausführungsform der Formteilanordnung 1. Die Unterschiede zu der ersten Ausführungsform, auf deren Beschreibung grundsätzlich hingewiesen wird, liegen darin, dass die erste Schweißfläche 9 neben der Teilfläche 10 eine weitere Teilfläche 17 aufweist. Diese ist bezüglich der Teilfläche 10 angewinkelt und schließt sich vorzugsweise unmittelbar an diese an. Die Teilfläche 17 ist ebenso wie die Teilfläche 10 plan beziehungsweise eben. Sie kann kreisringförmig sein. Die Schweißfläche 9 liegt in dem dargestellten Ausführungsbeispiel senkrecht zu der Längsmittelachse 2 vor, während die Teilfläche 17 angewinkelt ist und insoweit als Kegelmantelabschnittsfläche ausgestaltet ist.

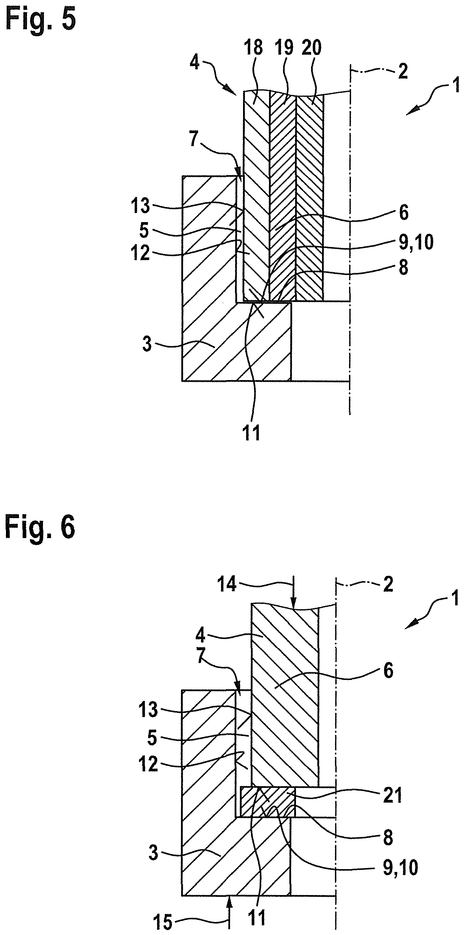

Die Figur 5 zeigt eine erfindungsgemäße Variante der Formteilanordnung 1, bei welcher das zweite Kunststoffformteil 4 mehrschichtig ist und insoweit mehrere Schichten aufweist, hier beispielsweise Schichten 18, 19 und 20. Ansonsten wird auf die vorstehenden Ausführungen verwiesen. Insbesondere können die Schweißflächen 9 und 11 entsprechend einer der Ausführungsformen gemäß den vorstehenden Ausführungen ausgestaltet sein. Beispielsweise bestehen die Schichten 18, 19 und 20 aus unterschiedlichen Materialien. Insbesondere ist es dabei vorgesehen, dass die unmittelbar benachbart zu der die Aufnahme 5 in radialer Richtung nach außen begrenzenden Innenumfangsfläche 12 angeordneten Schicht 18 aus einem mit dem Material des ersten Kunststoffformteils 3 verschweißbaren Material besteht. Die Schicht 19 kann dagegen als Füllschicht ausgebildet sein und insoweit aus einem nicht mit dem ersten Material des ersten Kunststoffformteils 3 verschweißbaren Material, insbesondere einem kostengünstigen Material, bestehen. Die Schicht 20 kann dagegen derart ausgestaltet werden, dass sie eine ausreichende Resistenz gegenüber einem in dem zweiten Kunststoffformteil 4 zu transportierenden Fluids aufweist. Beispielsweise besteht die Schicht 18 ebenso wie das erste Kunststoffformteil 3 aus PA6.12 oder PA12. Die Schicht 19 kann aus PA6 bestehen, wohingegen die Schicht 20 beispielsweise aus PPA oder Fluorpolymer hergestellt wird.

Es kann zusätzlich oder alternativ vorgesehen sein, dass das erste Kunststoffformteil 3 sowie die Schicht 18 jeweils aus einem laserabsorbierenden Material bestehen, während für die Schichten 19 und 20 ein lasertransparentes Material vorgesehen ist. In diesem Fall kann beispielsweise eine Innenverschweißung vorgenommen werden, bei welcher der Laserstrahl 16 in radialer Richtung nach außen durch die Schichten 19 und 20 hindurchtritt und von der Schicht 18 sowie dem ersten Kunststoffformteil 3 absorbiert wird, sodass die Schicht 18 mit dem ersten Kunststoffformteil 3 verschweißt wird. Die Schicht 18 besteht in diesem Fall aus dem zweiten Material des zweiten Kunststoffformteils 4, welches mit dem ersten Material des ersten Kunststoffformteils 3 verschweißbar ist. Auch beliebige andere Materialkombinationen für die Schichten 18, 19 und 20 sind jedoch realisierbar.

Die Figur 6 zeigt eine schematische Darstellung der Formteilanordnung 1 in einer nicht erfindungsgemäßen Ausgestaltung, wobei zwischen dem ersten Kunststoffformteil 3 und dem zweiten Kunststoffformteil 4 ein Einlegeteil 21 angeordnet ist. Das Einlegeteil 21 liegt vorzugsweise in axialer Richtung gesehen einerseits an dem ersten Kunststoffformteil 3, insbesondere der ersten Schweißfläche 9, und andererseits an dem zweiten Kunststoffformteil 4, insbesondere der zweiten Schweißfläche 11, an. In radialer Richtung kann es an der Innenumfangsfläche 12 anliegen oder von ihr beabstandet angeordnet sein. Bevorzugt besteht das Einlegeteil 21 aus laserabsorbierendem Material. Das erste Kunststoffformteil 3 und das zweite Kunststoffformteil 4 können beide aus lasertransparentem Material bestehen. Eines der Kunststoffformteile 3 und 4 kann jedoch auch aus einem laserabsorbierenden Material bestehen, beispielsweise das erste Kunststoffformteil bei einer Innenverschweißung und das zweite Kunststoffformteil bei einer Außenverschweißung. Unter dem Einfluss des Lasterstrahls 16 wird das Einlegeteil 21 aufgeschmolzen, sodass das Aufeinanderzuverlagern der Kunststoffformteile 3 und 4 ermöglicht wird.

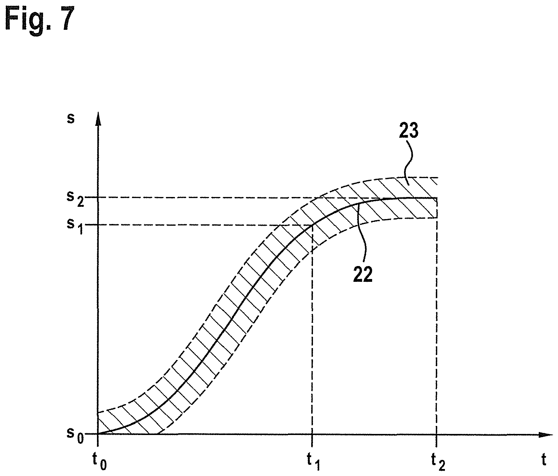

Die Figur 7 zeigt ein Diagramm, in welchem eine Relativposition s der beiden Kunststoffformteile 3 und 4 über der Zeit t aufgetragen ist. Ab einem Zeitpunkt t ≥ to wird das Laserschweißen durchgeführt, der Laserstrahl 16 also erzeugt. Bevorzugt wird ebenso ab dem Zeitpunkt t ≥ to die Verlagerung der Kunststoffformteile 3 und 4 aufeinander zu beziehungsweise ihre Beaufschlagung mit der Verlagerungskraft begonnen. Der Laserstrahl 16 bleibt über einen gesamten Schweißzeitraum aktiviert, welcher zum Zeitpunkt t = t₁ endet. Der Schweißzeitraum liegt also für t₀ ≤ t ≤ t₁ vor. Unmittelbar an den Schweißzeitraum schließt sich ein Haltezeitraum für t₁ ≤ t ≤ t₂ an. Der Haltezeitraum endet in dem Zeitpunkt t = t₂.

Während des Zeitraums, bestehend aus Schweißzeitraum und Haltezeitraum, wird die Relativposition s über der Zeit t festgehalten. Rein beispielhaft sind hier für die Zeitpunkt t = t₀, t₁ und t₂ die Relativpositionen s = s₀, s₁ und s₂ angedeutet. Es kann jedoch auch lediglich eine Relativposition an einem bestimmten Zeitpunkt oder ein Verlauf der Relativposition s, also ein Relativpositionsverlauf über der Zeit t, erfasst werden. Ein solcher Relativpositionsverlauf ist durch den Verlauf 22 angedeutet, welcher die vorstehend erläuterten Relativpositionen durchläuft. Folgt dieser Verlauf 22 einem Sollwertverlauf oder liegt er in einem Sollwertbereich 23, so kann davon ausgegangen werden, dass die hergestellte Formteilanordnung 1 in Ordnung ist. Anderenfalls wird von einer nicht ordnungsgemäß hergestellten Formteilanordnung 1 ausgegangen.

Mithilfe der vorstehend beschriebenen Formteilanordnung 1 beziehungsweise der erläuterten Vorgehensweise ist ein kostengünstiges und prozesssicheres Laserschweißen der beiden Kunststoffformteile 3 und 4 möglich. Die Herstellung der Formteilanordnungen 1 ist einerseits mit geringem Ausschuss möglich, andererseits ist der Ausschuss zuverlässig erkennbar.

## Patentansprüche

1. Verfahren zum Herstellen einer Formteilanordnung (1) aus einem ersten Kunststoffformteil (3) und einem zweiten Kunststoffformteil (4) mittels Laserschweißen, wobei das erste Kunststoffformteil (3) zumindest teilweise aus einem ersten Material und das zweite Kunststoffformteil (4) zumindest teilweise aus einem mit dem ersten Material verschweißbaren zweiten Material besteht, wobei ein Schweißbereich (6) des zweiten Kunststoffformteils (4) in einer gestuften Aufnahme des ersten Kunststoffformteils (3) oder umgekehrt angeordnet wird, wobei die Kunststoffformteile (3,4) jeweils als Fluidleitungselement vorliegen, wobei in der Aufnahme (5) eine zumindest mit einer Teilfläche (10) in einer ersten Rotationsfläche liegende sowie dem zweiten Kunststoffformteil (4) zugewandte erste Schweißfläche (9) des ersten Kunststoffformteils (3) und an dem zweiten Kunststoffformteil (4) eine stirnseitige, in einer zweiten Rotationsfläche liegende sowie dem ersten Kunststoffformteil (3) zugewandte zweite Schweißfläche (11) ausgebildet wird, und wobei das erste Kunststoffformteil (3) und das zweite Kunststoffformteil (4) während des Laserschweißens in einer Verlagerungsrichtung aufeinander zu verlagert werden, wobei die erste Schweißfläche (9) und die zweite Schweißfläche (11) während des Laserschweißens aneinander anliegen oder sich über ein Einlegeteil aneinander abstützen, und wobei ein zum Laserschweißen verwendeter Laserstrahl (16) in radialer Richtung nach innen oder nach außen gerichtet ist, **dadurch gekennzeichnet, dass** das zweite Kunststoffformteil (4) mehrschichtig ausgebildet wird, wobei die Schichten (18,19,20) des zweiten Kunststoffformteils (4) aus unterschiedlichen Materialien bestehen und die zweite Schweißfläche (11) von nur einer Untermenge der Schichten (18,19,20) ausgebildet wird.

2. Verfahren nach Anspruch 1, **dadurch gekennzeichnet, dass** die erste Schweißfläche (9) und die zweite Schweißfläche (11) derart ausgebildet werden, dass die erste Rotationsfläche und die zweite Rotationsfläche - im Längsschnitt gesehen - parallel zueinander oder gegeneinander angewinkelt sind und/oder dass die erste Rotationsfläche und/oder die zweite Rotationsfläche senkrecht auf der Verlagerungsrichtung stehen.

3. Verfahren nach einem der vorhergehenden Ansprüche, **dadurch gekennzeichnet, dass** die erste Schweißfläche (9) mit wenigstens einer weiteren Teilfläche (17) ausgebildet wird, die gegenüber der Teilfläche (10) angewinkelt ist.

4. Verfahren nach einem der vorhergehenden Ansprüche, **dadurch gekennzeichnet, dass** die erste Schweißfläche (9) an eine Innenumfangsfläche (12) des ersten Kunststoffformteils (3) und die zweite Schweißfläche (11) an eine Außenumfangsfläche (13) des zweiten Kunststoffformteils (4) angrenzt, wobei die Innenumfangsfläche (12) und die Außenumfangsfläche (13) - in Umfangsrichtung gesehen zumindest abschnittsweise - mit Spielpassung oder Übergangspassung zueinander angeordnet werden.

5. Verfahren nach einem der vorhergehenden Ansprüche, **dadurch gekennzeichnet, dass** ein zum Laserschweißen verwendeter Laserstrahl (16) die erste Rotationsfläche in sich aufnimmt, insbesondere mittig, oder benachbart, insbesondere unmittelbar benachbart, zu der ersten Rotationsfläche angeordnet wird.

6. Verfahren nach Anspruch 5, **dadurch gekennzeichnet, dass** der Laserstrahl (16) bezüglich des ersten Kunststoffformteils (3) und/oder des zweiten Kunststoffformteils (4) ortsfest positioniert wird.

7. Verfahren nach einem der vorhergehenden Ansprüche, **dadurch gekennzeichnet, dass** der Laserstrahl (16) parallel zu der ersten Rotationsfläche ausgerichtet oder bezüglich der ersten Rotationsfläche angewinkelt wird, wobei die erste Schweißfläche (9) wenigstens teilweise, insbesondere vollständig, in dem Laserstrahl (16) liegt.

8. Verfahren nach einem der vorhergehenden Ansprüche, **dadurch gekennzeichnet, dass** das erste Kunststoffformteil (3) und/oder das zweite Kunststoffformteil (4) und/oder das Einlegeteil jeweils aus einem lasertransparenten Material oder einem laserabsorbierenden Material hergestellt werden.

9. Verfahren nach einem der vorhergehenden Ansprüche, **dadurch gekennzeichnet, dass** die Relativposition des ersten Kunststoffformteils (3) und des zweiten Kunststoffformteils (4) zueinander über der Zeit, insbesondere zu wenigstens einem Zeitpunkt, erfasst und zur Qualitätssicherung der Formteilanordnung (1) ausgewertet wird.

## Claims

1. A method for producing a molded part assembly (1) from a first plastic molded part (3) and from a second plastic molded part (4) by laser welding, whereby the first plastic molded part (3) consists at least partially of a first material and the second plastic molded part (4) consists at least partially of a second material which can be welded to the first material, whereby a welding region (6) of the second plastic molded part (4) is arranged in a stepped receiving means of the first plastic molded part (3) or vice versa, whereby the plastic molded parts (3, 4) are each present as a fluid line element, whereby a first welding surface (9) of the first plastic molded part (3) which welding surface is located at least with a partial surface (10) in the first rotational surface and faces the second plastic molded part (4) is formed in the receiving means (5), and a front-side, second welding surface (11) located in the second rotational surface and facing the first plastic molded part (3) is formed on the second plastic molded part (4), and whereby the first plastic molded part (3) and the second plastic molded part (4) are shifted onto one another in the shifting direction during the laser welding, whereby the first welding surface (9) and the second welding surface (11) contact one another or are supported on one another by an insertion part, and whereby a laser beam (16) used for the laser welding is directed inward or outward in a radial direction, **characterized in that** the second plastic molded part (4) is formed in several layers, wherein the layers (18, 19, 20) of the second plastic molded part (4) consist of different materials and the second welding surface (11) is formed by only a subset of the layers (18, 19, 20).

2. The method according to claim 1, **characterized in that** the first welding surface (9) and the second welding surface (11) are formed in such a manner that the first rotational surface and the second rotational surface - viewed in a longitudinal section - are angled parallel to one another or against and/or that the first rotational surface and/or the second rotational surface stand vertically on the shifting direction.

3. The method according to one of the previous claims, **characterized in that** the first welding surface (9) is formed with at least one other partial surface (17) which is angled in relation to the partial surface (10).

4. The method according to one of the previous claims, **characterized in that** the first welding surface (9) is adjacent to an inner circumferential surface (12) of the first plastic molded part (3) and that the second welded surface (11) is adjacent to an outer circumferential surface (13) of the second plastic molded part (4), wherein the inner circumferential surface (12) and the outer circumferential surface (13) - viewed at least in sections in the circumferential direction - are arranged relative to one another with a clearance fit or a transitional fit.

5. The method according to one of the previous claims, **characterized in that** a laser beam (16) used for the laser welding receives the first rotational surface in itself and is arranged in particular centrally or adjacently, in particular directly adjacently to the first rotational surface.

6. The method according to claim 5, **characterized in that** the laser beam (16) is positioned in a stationary manner relative to the first plastic molded part (3) and/or to the second plastic molded part (4).

7. The method according to one of the previous claims, **characterized in that** the laser beam (16) is aligned parallel to the first rotational surface or is angled relative to the first rotational surface, wherein the first welding surface (9) lies at least partially, in particular entirely in the laser beam (16).

8. The method according to one of the previous claims, **characterized in that** the first plastic molded part (3) and/or the second plastic molded part (4) and/or the insertion part are produced from a laser-transparent material or from a laser-absorbing material.

9. The method according to one of the previous claims, **characterized in that** the relative position of the first plastic molded part (3) and of the second plastic molded part (4) to one another is determined over time, in particular at least one point in time and is evaluated for ensuring the quality of the molded part assembly (1).

## Revendications

1. Procédé de fabrication d'une disposition de pièces moulées (1) composée d'une première pièce moulée en matière plastique (3) et d'une deuxième pièce moulée en matière plastique (4) au moyen d'une soudure laser, la première pièce moulée en matière plastique (3) se composant au moins en partie d'un premier matériau et la deuxième pièce moulée en matière plastique (4) se composant au moins en partie d'un deuxième matériau pouvant être soudé avec le premier matériau, une zone de soudure (6) de la deuxième pièce moulée en matière plastique (4) étant disposée dans un logement étagé de la première pièce moulée en matière plastique (3) ou inversement, les pièces moulées en matière plastique (3, 4) se présentant respectivement comme éléments conducteurs de fluide, une première zone de soudure (9) de la première pièce moulée en matière plastique (4), se trouvant au moins avec une zone partielle (10) dans une première surface de rotation et tournée vers la deuxième pièce moulée en matière plastique (4), étant constituée dans le logement (5), et une deuxième zone de soudure (11) frontale, se trouvant dans une deuxième surface de rotation et tournée vers la première pièce moulée en matière plastique (4), étant constituée sur la deuxième pièce moulée en matière plastique (4), et la première pièce moulée en matière plastique (3) et la deuxième pièce moulée en matière plastique (4) étant déplacées l'une sur l'autre dans un sens de déplacement pendant la soudure laser, la première zone de soudure (9) et la deuxième zone de soudure (11) étant adjacentes pendant la soudure laser ou se soutenant par une pièce d'insertion et un faisceau laser (16) utilisé pour la soudure laser étant dirigé vers l'intérieur ou vers l'extérieur dans le sens radial, **caractérisé en ce que** la deuxième pièce moulée en matière plastique (4) est constituée de plusieurs couches, les couches (18, 19, 20) de la deuxième pièce moulée en matière plastique (4) se composant de divers matériaux et la deuxième zone de soudure (11) étant constituée de seulement un sous-ensemble des couches (18, 19, 20).

2. Procédé conformément à la revendication n°1, **caractérisé en ce que** la première zone de soudure (9) et la deuxième zone de soudure (11) sont constituées de façon à ce que la première surface de rotation et la deuxième surface de rotation, vues en coupe longitudinale, sont inclinées parallèlement l'une à l'autre ou l'une contre l'autre et/ou que la première surface de rotation et/ou la deuxième surface de rotation sont perpendiculaires au sens de déplacement.

3. Procédé conformément à l'une des revendications précédentes, **caractérisé en ce que** la première zone de soudure (9) est constituée au moins d'une autre zone partielle (17) qui est inclinée par rapport à la zone partielle (10).

4. Procédé conformément à l'une des revendications précédentes, **caractérisé en ce que** la première zone de soudure (9) est adjacente à une surface circonférentielle intérieure (12) de la première pièce moulée en matière plastique (3) et la deuxième zone de soudure (11) est adjacente à une surface circonférentielle extérieure (13) de la deuxième pièce moulée en matière plastique (4), la surface circonférentielle intérieure (12) et la surface circonférentielle extérieure (13), vues au moins en partie dans le sens circonférentiel, étant disposées l'une par rapport à l'autre avec ajustement de jeu ou ajustement de transition.

5. Procédé conformément à l'une des revendications précédentes, **caractérisé en ce qu'**un faisceau laser (16) utilisé pour la soudure laser et absorbant la première surface de rotation est disposé en particulier au centre ou dans les zones adjacentes, en particulier directement dans les zones adjacentes, par rapport à la première surface de rotation.

6. Procédé conformément à la revendication n°5, **caractérisé en ce que** le faisceau laser (16) est positionné de façon fixe par rapport à la première pièce moulée en matière plastique (3) et/ou à la deuxième pièce moulée en matière plastique (4).

7. Procédé conformément à l'une des revendications précédentes, **caractérisé en ce que** le faisceau laser (16) est orienté parallèlement à la première surface de rotation ou incliné par rapport à la première surface de rotation, la première zone de soudure (9) se trouvant, au moins partiellement, en particulier intégralement, dans le faisceau laser (16).

8. Procédé conformément à l'une des revendications précédentes, **caractérisé en ce que** la première pièce moulée en matière plastique (3) et/ou la deuxième pièce moulée en matière plastique (4) et/ou la pièce d'insertion sont fabriquées respectivement à partir d'un matériau transparent au laser ou d'un matériau absorbant au laser.

9. Procédé conformément à l'une des revendications précédentes, **caractérisé en ce que** la position relative de la première pièce moulée en matière plastique (3) par rapport à la deuxième pièce moulée en matière plastique (4) est enregistrée dans le temps, en particulier à au moins un moment donné, et évaluée à des fins d'assurance qualité de la disposition des pièces moulées (1).
